# DEMANDE DE BREVET EUROPEEN

(11) **EP 4 651 524 A1**
(43) Date de publication de la demande: **19.11.2025**
(21) Numéro de dépôt: 25173409.1
(22) Date de dépôt: 29.04.2025
(51) Int. Cl.: H04W 4/02, G01S 5/02, G07C 9/00, H04W 4/40, H04W 4/80, G01S 13/02, G01S 13/76, G01S 13/931, H04B 1/7163

(54) **PLANIFICATION PAR SYSTÈME UWB DE VÉHICULE DE LOCALISATIONS**

(30) Priorité: 14.05.2024 FR 2404913
(71) Demandeur: Valeo Comfort and Driving Assistance, 94000 Créteil (FR)
(72) Inventeur: OGUZ, Onur, 94000 Créteil (FR); DJOKIC, Georges, 94000 Créteil (FR); LECONTE, Eric, 94000 Créteil (FR); MENARD, Eric, 94000 Créteil (FR)
(74) Mandataire: Delaval, Guillaume Laurent

(57) **Abrégé**

On propose un procédé de planification implémenté par un système UWB de véhicule (appelé ensuite procédé de planification). Le système UWB comprend un ou plusieurs capteurs UWB. Le système UWB a enregistré une pluralité d'identifiants portatifs. La pluralité d'identifiants portatifs comprend un boîtier de clé télécommande. Le procédé comprend une réception S10, pour chaque identifiant portatif, d'une programmation respective de localisations UWB avec le système UWB de véhicule. Le procédé comprend un détection 520 d'une superposition entre au moins deux localisations UWB programmées. Les au moins deux localisations UWB superposées incluent une localisation UWB avec le boîtier de clé. Le procédé comprend un décalage 530, dans la programmation respective du boîtier de clé, de la localisation UWB superposée.

Le procédé offre une utilisation améliorée au système UWB de véhicule

## Description

### Domaine technique

La présente divulgation concerne un procédé de planification implémenté par un système UWB (acronyme de l'anglais « Ultra Wide Band », qui signifie en français « Bande Ultra Large »), un procédé d'utilisation d'un système UWB, un système UWB configuré pour exécuter ou être utilisé selon de tels procédés, un capteur UWB pour un tel système UWB et un programme informatique pour l'exécution de tels procédés.

### Arrière-plan technique

Il existe aujourd'hui des véhicules équipés d'un système UWB comprenant un ou plusieurs capteurs UWB installés dans le véhicule. Un tel système UWB enregistre généralement un ensemble d'identifiants portatifs (tels que des boîtiers de clé ou des dispositifs tiers comme des téléphones portables ou des montres connectées), et est ensuite capable de déterminer la position de chacun de ces identifiants portatifs à partir de localisations UWB entre chacun des identifiants portatifs et les capteurs UWB du système. De tel système UWB sont ainsi capable de localiser en même temps le boîtier de clé du conducteur et le téléphone portable d'un passager, et d'exécuter en fonction de la localisation des identifiants différentes fonctions du véhicule (comme par exemple l'ouverture des portes et/ou le démarrage du véhicule lorsqu'un utilisateur approche du véhicule).

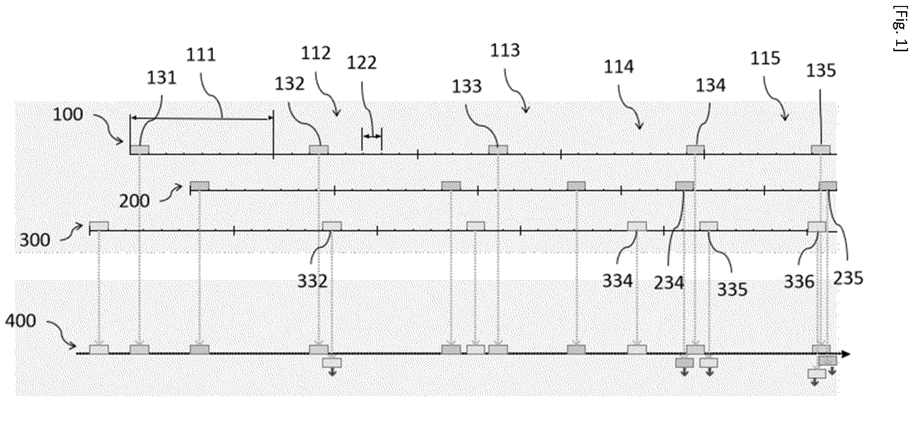

Pour réaliser ces localisations, chaque identifiant portatif peut être configuré pour envoyer sa programmation respective au système UWB, par exemple lorsque celui-ci entre dans un certain périmètre autour du véhicule. Le système UWB et l'identifiant portatif peuvent ensuite être configurés pour réaliser les localisations UWB selon la programmation respective établie. La programmation inclut les informations temporelles de trames de localisation ainsi que le type d'identifiant (clé ou smartphone) concerné par la localisation sur la base de la spécification du standard IEE 802.15.4z « IEEE Standard for Low Rate Wireless Networks - Amendment 1 : Enhanced Ultra Wideband (UWB) Physical Layers (PHYs) and Associated Ranging Techniques ». La [Fig. 1] montre un exemple de telles programmations reçues pour un ensemble de trois identifiants portatifs enregistrés par un système UWB : un boîtier de clé 100 et deux téléphones portables 200, 300. La programmation reçue de chaque identifiant portatif comprend, sur une durée prédéterminée divisée en périodes (111, 112, 113 et 114 pour le boîtier de clé 100), une localisation UWB pour chacune des périodes de la durée prédéterminée (la localisation 131 pour le bloc 111, 132 pour le 112, etc.). Chaque période est divisé en un nombre prédéterminé de créneaux 122 (8 créneaux par période dans cet exemple), et la programmation comprend, pour chaque localisation, le créneau de la période sur lequel la localisation est prévue.

Lorsque deux localisations sont programmées en même temps (c'est-à-dire de telle sorte qu'elles se chevaucheraient si elles étaient exécutées, les créneaux sur lesquelles elles sont programmées ayant une intersection non nulle), les procédés existants de planification comprennent généralement une annulation de la programmation d'une des deux localisations UWB qui se chevauchent. En effet, cela permet de réduire le risque d'interférence entre les échanges UWB des deux localisations UWB. Par exemple, sur la figure 1, la localisation UWB 132 du premier identifiant portatif 100 et la localisation UWB 332 du troisième identifiant portatif 300 sont programmées en même temps, et le procédé existant annule donc la localisation UWB 332, de sorte que, sur la programmation finale du système 400, seule la localisation UWB 132 reste programmée. De même, lorsque trois localisations UWB se chevauchent (comme les localisations 134, 234 et 335 ou les localisations 135, 235 et 336), deux des localisations peuvent être déprogrammées pour réduire le risque d'interférence entre les échanges UWB avec les différents identifiants.

Une limitation est que ces annulations de localisations UWB réduisent le nombre de localisations finalement exécutées pour chaque dispositif portatif dont l'une des localisations a été annulée. Pour le dispositif 300 par exemple, l'espacement temporel entre deux localisations devient supérieur à 2 périodes après la localisation 333 par exemple. Cela a pour conséquence de réduire la précision et la sensibilité de la localisation pour ces dispositifs portatifs.

C'est pourquoi, il existe un besoin pour un système UWB de véhicule amélioré.

### Résumé

On propose un procédé de planification implémenté par un système UWB de véhicule (appelé ensuite « procédé de planification », ou « procédé »). Le système UWB comprend un ou plusieurs capteurs UWB. Le système UWB a enregistré une pluralité d'identifiants portatifs. La pluralité d'identifiants portatifs comprend un boîtier de clé télécommande. Le procédé comprend une réception, pour chaque identifiant portatif, d'une programmation respective de localisations UWB avec le système UWB de véhicule. Le procédé comprend un détection d'une superposition entre au moins deux localisations UWB programmées. Les au moins deux localisations UWB superposées incluent une localisation UWB avec le boîtier de clé. Le procédé comprend un décalage, dans la programmation respective du boîtier de clé, de la localisation UWB superposée.

La localisation UWB superposée peut être programmée à l'intérieur d'un premier créneau d'une période respective incluant plusieurs créneaux. La localisation UWB peut être décalée sur un deuxième créneau de la période respective.

Le décalage de la localisation UWB superposée peut comprendre une projection, sur la programmation respective du boîtier de clé, des localisations UWB de chaque autre dispositif portatif, une détermination d'au moins un créneau libre de la période respective en excluant chaque créneau sur lequel au moins une localisation UWB projetée se superpose, et une reprogrammation de la localisation UWB superposée sur l'au moins un créneau libre déterminé.

La détection de la superposition peut comprendre une projection des localisations UWB de chacun des dispositifs portatifs sur un axe de temps commun, et une détermination d'un chevauchement entre les projections des au moins deux localisations UWB superposées.

Le décalage de la localisation UWB superposée peut comprendre un envoi, par le système UWB au boîtier de clé, d'un ordre d'exécution de la programmation respective avec la localisation UWB décalée.

La pluralité d'identifiants portatifs peut comprendre au moins deux dispositifs tiers. Les au moins deux localisations UWB superposées peuvent inclure au moins une localisation UWB avec chacun des au moins deux dispositifs tiers. Le procédé peut comprendre en outre une détermination d'un dispositif prioritaire parmi les au moins deux dispositifs tiers, et une déprogrammation, pour chaque dispositif tier autre que le dispositif prioritaire, de la localisation UWB incluse dans les au moins deux localisations UWB superposées.

Les étapes de détection et de décalage peuvent être répétées à chaque réception d'une nouvelle programmation respective pour un nouvel identifiant portatif.

On propose également un procédé d'utilisation d'un système UWB de véhicule (appelé ensuite « procédé d'utilisation »). Le système UWB comprend comprenant un ou plusieurs capteurs UWB. Le système UWB a enregistré une pluralité d'identifiants portatifs. La pluralité d'identifiants portatifs comprend le boîtier de clé. Le procédé d'utilisation comprend une exécution des localisations UWB planifiées selon le procédé de planification.

On propose également un système UWB de véhicule comprenant un ou plusieurs capteurs UWB. Le système UWB est configuré pour exécuter le procédé de planification et/ou pour être utilisé selon le procédé d'utilisation.

On propose également un capteur UWB pour système UWB de véhicule. Le capteur UWB est configuré pour une exécution par le système du procédé de planification et/ou pour une utilisation du système selon le procédé d'utilisation.

On propose également un premier programme d'ordinateur pour système UWB de véhicule. Le deuxième programme d'ordinateur comprend des instructions qui, lorsque le programme est exécuté par un processeur du système UWB de véhicule, conduisent celui-ci à exécuter le procédé de planification et/ou à être utilisé selon le procédé d'utilisation.

On propose également un deuxième programme d'ordinateur pour capteur UWB de système UWB de véhicule. Le deuxième programme d'ordinateur comprend des instructions qui, lorsque le programme est exécuté par un processeur du capteur UWB, conduisent à une exécution par le système du procédé de planification et/ou à une utilisation du système selon le procédé d'utilisation.

On propose également un troisième programme d'ordinateur comprenant le premier programme d'ordinateur et le deuxième programme d'ordinateur.

On propose également un support de stockage lisible par ordinateur sur lequel est enregistré un ou plusieurs desdits programmes d'ordinateur.

### Brève description des figures

Des exemples non-limitants vont être décrits en référence aux figures suivantes :
La [Fig. 1] illustre un exemple de solution existante de planification de localisations UWB avec des dispositifs portatifs.
La [Fig. 2] illustre un exemple d'organigramme du procédé de planification.
La [Fig. 3] illustre des exemples de décalage de localisations UWB superposées selon le procédé de planification.
La [Fig. 4] illustre des exemples de détermination de créneaux libres.
La [Fig. 5] illustre un exemple de système UWB de véhicule.

### Description détaillée

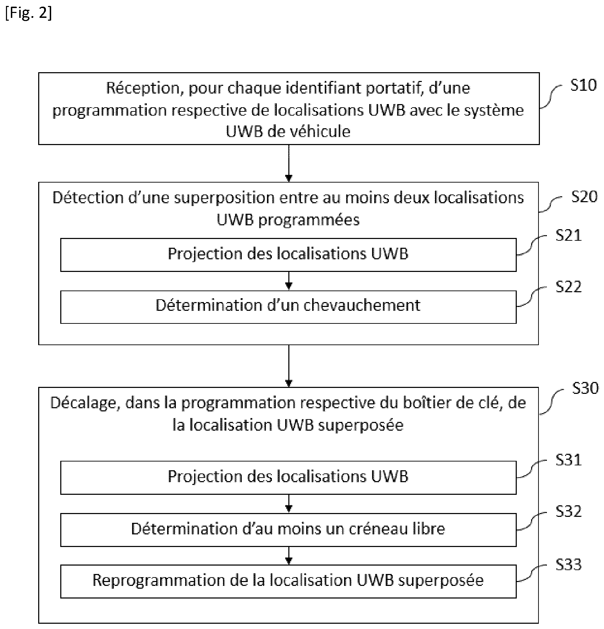

En référence à l'organigramme de la figure 2, on propose un procédé de planification implémenté par un système UWB de véhicule (appelé ensuite procédé de planification). Le système UWB comprend un ou plusieurs capteurs UWB. Le système UWB a enregistré une pluralité d'identifiants portatifs. La pluralité d'identifiants portatifs comprend un boîtier de clé télécommande. Le procédé comprend une réception S10, pour chaque identifiant portatif, d'une programmation respective de localisations UWB avec le système UWB de véhicule. Le procédé comprend un détection S20 d'une superposition entre au moins deux localisations UWB programmées. Les au moins deux localisations UWB superposées incluent une localisation UWB avec le boîtier de clé. Le procédé comprend un décalage S30, dans la programmation respective du boîtier de clé, de la localisation UWB superposée.

Le procédé offre une utilisation améliorée au système UWB de véhicule.

En effet, le décalage de la localisation UWB superposée permet d'éviter le risque d'interférences entre les échanges UWB des au moins deux localisations UWB qui étaient initialement programmées pour s'exécuter en même temps. Le procédé de planification permet donc de réduire le risque de perte de fiabilité induite par des interférences entre les échanges UWB de différentes localisations UWB.

En outre, la vérification permet d'éviter la solution directe mais suboptimale consistant à systématiquement annuler la programmation de localisations UWB superposées. En effet, le procédé permet de conserver la programmation de la localisation UWB initialement superposée. Notamment, l'annulation d'une localisation UWB réduit le nombre de localisations programmées pour l'identifiant portatif impliqué dans la localisation annulée, ce qui a pour conséquence de réduire la précision et la sensibilité de la localisation. En permettant de conserver la programmation de localisations UWB, le procédé permet donc d'augmenter la précision et la sensibilité de la localisations des identifiants portatifs.

On propose également un procédé d'utilisation d'un système UWB de véhicule comprenant une exécution des localisations UWB planifiées selon le procédé de planification. Notamment, le procédé d'utilisation peut comprendre une exécution des localisations UWB du boîtier de clé selon la nouvelle programmation définie (c'est-à-dire dans laquelle la localisation initialement superposée est décalée). L'exécution de chaque localisation peut comprendre une réalisation des échanges UWB entre l'identifiant portatif et le véhicule que la localisation comprend.

Après ou pendant l'exécution des localisations, le procédé d'utilisation peut comprendre une détermination de la position de chacun des identifiants portatifs à partir des localisations qui ont été exécutées. Par exemple, pour chaque identifiant portatif, l'exécution d'une localisation impliquant l'identifiant portatif peut comprendre une fourniture d'une position relative de l'identifiant portatif par rapport au système UWB. Par exemple, la localisation peut comprendre, pour chaque capteur (ou ancre) UWB, une mesure de distance respective entre l'identifiant portatif et le capteur UWB, et, une détermination de la position relative de l'identifiant portatif par rapport au système UWB à partir des mesures de distance respectives entre l'identifiant portatif et chacun des capteurs UWB. La position déterminée peut varier au cours du temps. Par exemple, chaque localisation peut fournir une position d'un identifiant portatif par rapport au système UWB à un instant donné, et l'ensemble des localisations impliquant cet identifiant portatif exécutées peuvent fournir une évolution de la position de cet identifiant portatif au cours du temps. Le procédé d'utilisation peut ainsi déterminer une évolution de la position de tous les identifiants portatifs.

Après l'exécution des localisations, le procédé d'utilisation peut comprendre une ou plusieurs utilisations des positions relatives des identifiants portatifs déterminées. Par exemple, le procédé d'utilisation peut comprendre une activation d'une ou plusieurs fonctionnalité du véhicule en fonction des positions relatives des identifiants portatifs. Par exemple, la fonctionnalité peut comprendre une fermeture du véhicule lorsqu'il est déterminé que les identifiants portatifs se trouvent à l'extérieur du véhicule, par exemple après écoulement d'une durée prédéterminée entre le moment où il est déterminé que chacun des identifiants portatifs est à l'extérieur. Dans des exemples, la fonctionnalité peut comprendre un déverrouillage sélectif d'un ou plusieurs ouvrants du véhicule (par exemple une porte conducteur, une porte passager ou un coffre du véhicule) en fonction des positions relatives des identifiants portatifs déterminées. Par exemple, la fonctionnalité peut comprendre un déverrouillage de la porte conducteur et du coffre du véhicule lorsque la position d'un des identifiants portatifs s'approche de la porte conducteur (par exemple le boîtier de clé) et que la position d'un autre des identifiants portatifs (par exemple un dispositif tiers) s'approche du coffre (c'est-à-dire lorsque deux utilisateurs portant ces identifiants s'approchent vers ces ouvrants, par exemple en même temps ou l'un après l'autre). Dans d'autres exemples, la fonctionnalité peut comprendre un déverrouillage de la porte conducteur et/ou des portes passager (par exemple lorsqu'un ou plusieurs utilisateurs s'approchent de ces ouvrants), et, une réalisation, pour chaque utilisateur, d'un ou plusieurs réglages (par exemple réglage de hauteur d'appui-tête ou de position de siège) en fonction d'une zone d'accès de l'utilisateur (par exemple en fonction de l'ouvrant vers lequel l'utilisateur s'est approché). Dans d'autres exemples encore, la fonctionnalité peut comprendre une activation d'une ou plusieurs fonctions du véhicule telles qu'un allumage de musique ou un réglage des rétroviseurs convenant à la personne portant l'identifiant portatif qui est positionné au niveau du siège conducteur. Le procédé d'utilisation peut comprendre toute combinaison de ces exemples de fonctionnalité.

Le procédé de planification est maintenant discuté. Les étapes du procédé de planification peuvent être exécutées par le système UWB du véhicule. Chaque étape de ce procédé est maintenant discutée plus en détail.

Le système UWB a enregistré une pluralité d'identifiants portatifs (ou dispositifs portatifs). Le terme « identifiant portatif » désigne un objet mobile identifiable par le véhicule, et par exemple dont la localisation autorise ou non une ou plusieurs actions (spécifiques) du véhicule. Par exemple, l'identifiant peut être utilisé pour ouvrir le véhicule et/ou allumer le moteur du véhicule. Par exemple, le procédé peut comprendre une ouverture du véhicule lorsque l'identifiant est localisé à proximité du véhicule, ou un allumage du moteur lorsque l'identifiant est dans le véhicule. Les identifiants portatifs enregistrés par le système comprennent au moins un boîtier de clé télécommande du véhicule. Les identifiants portatifs enregistrés par le système peuvent également comprendre un ou plusieurs dispositifs tiers, c'est-dire fabriqués par une entreprise qui diffère de celle fabriquant le système UWB du véhicule. Par exemple, les un ou plusieurs dispositifs tiers peuvent comprendre des appareils intelligents (aussi appelé dispositifs intelligents, en anglais « smart device »), tels que des montres connectées ou des téléphones portables.

Le véhicule et chaque identifiant portatifs peuvent être configurés pour communiquer en utilisant le protocole de communication UWB (acronyme de l'anglais « Ultra Wide Band », qui signifie en français « Bande Ultra Large »). UWB peut faire référence à un protocole de communication, par exemple celui spécifié par l'IEEE 802.15.4. Le véhicule et un ou plusieurs identifiants portatifs (par exemple tous) peuvent également être configurés pour communiquer en utilisant un ou plusieurs autres protocoles de communication, comme par exemple le protocole de communication BLE (acronyme de l'anglais « Bluetooth Low Energy », qui signifie en français « Bluetooth faible énergie ») ou le protocole de communication NFC (acronyme de l'anglais « Near Field Communication », qui signifie en français « Communication en Champ Proche »).

Le procédé comprend, pour chaque identifiant portatif, une réception S10 d'une programmation respective de localisations UWB avec le système UWB de véhicule par les un ou plusieurs capteurs UWB. La programmation reçue peut être une donnée numérique. La programmation respective reçue pour chaque identifiant portatif peut comprendre, pour chaque localisation UWB de la programmation, des données numériques définissant un positionnement temporel de la localisation UWB, par exemple sur un axe (ou une ligne) de temps. Par exemple, la programmation respective reçue pour chaque identifiant portatif peut comprendre, pour chaque localisation UWB de la programmation, des instants de début et de fin renseignés sur cet axe de temps. L'axe de temps peut représenter une durée à venir et qui n'est pas encore écoulée au moment de la réception de la programmation. Par exemple, la programmation respective peut comprendre, pour un ensemble de périodes successives (de durée sensiblement égale), une localisation UWB pour chaque période. En particulier, chaque période peut comprendre un nombre identique de créneaux successifs (de durée sensiblement égale), et la localisation UWB peut être programmée à l'intérieur d'un de ces créneaux. Les données numériques peuvent dans ce cas comprendre, pour chaque localisation UWB, le numéro du créneau sur lequel la localisation UWB est programmée. Alternativement ou additionnellement, les données numériques peuvent comprendre une donnée désignant un instant de début de ce créneau sur lequel la localisation est programmée et une donnée désignant un instant de fin de ce créneau. Alternativement ou additionnellement, les données numériques définissant chaque localisation peuvent comprendre des données numériques définissant chacune des émissions UWB de la localisation UWB. Par exemple, les données numériques peuvent désigner un instant de début et un instant de fin de chaque échange UWB de la localisation UWB.

Chaque identifiant portatif enregistré peut être configuré pour envoyer sa programmation respective qui est reçue par le système UWB. Chaque identifiant portatif enregistré peut être dans un périmètre donné autour du véhicule permettant l'envoi au système UWB de sa programmation respective. Les programmations respectives peuvent être envoyées par les identifiants portatifs et reçues par le système UWB en utilisant un protocole de communication d'accompagnement (tel que le protocole de communication BLE). Le système UWB peut également avoir enregistré un ou plusieurs autres identifiants (ou dispositifs) portatifs, qui peuvent par exemple être actuellement hors de portée. La prise en compte de ces autres identifiants portatifs est discutée ultérieurement.

Après ou pendant la réception S10, le procédé peut comprendre, un enregistrement de toutes les programmations reçues, par exemple sur une mémoire du système. La programmation reçue de chaque identifiant portatif peut comprendre le nombre de créneaux par période et/ou la durée de chaque créneau ou de chaque période. Pour chaque période, la programmation peut également comprendre une indication du créneau sur lequel la localisation UWB est programmée pour cette période (celui-ci pouvant varier aléatoirement selon les périodes ou être fixe). Ces informations peuvent être propre à l'identifiant portatif. L'identifiant portatif peut être configuré pour imposer certains paramètres de sa programmation.

Chaque localisation UWB peut comprendre un ou plusieurs échanges UWB entre l'identifiant portatif et les capteurs UWB du système. Chaque échange UWB peut être constitué d'envois de trames entre l'identifiant et les un ou plusieurs capteurs UWB. La programmation des une ou plusieurs localisations peut comprendre, pour chaque localisation, une détermination d'une position temporelle pour chacun des envois de trames de chacun des échanges UWB de la localisation. Un envoi d'une trame d'un échange UWB peut avoir une durée comprise entre 60 et 137 microsecondes.

Après la réception S10, le procédé comprend la détection S20 de la superposition entre au moins deux localisations UWB programmées. Les au moins deux localisations UWB superposées incluent une localisation UWB avec le boîtier de clé. En d'autres termes, les créneaux sur lesquels les au moins deux localisations UWB sont programmés ont une intersection qui est non-nulle. Par exemple, le créneau sur lequel une première localisation UWB impliquant un premier identifiant portatif est programmée peut commencer avant la fin du créneau sur lequel une deuxième localisation UWB impliquant un deuxième identifiant portatif est programmée (le premier ou le deuxième identifiant portatif étant le boîtier de clé).

La détection S20 peut être réalisée de n'importe quelle manière. Par exemple, comme illustré sur la figure 2, la détection S20 de la superposition peut comprendre les deux étapes S21 et S22. La première étape S21 peut être une projection des localisations UWB de chacun des dispositifs portatifs sur un axe de temps commun. La projection S21 des localisations UWB peut comprendre, pour chaque localisation UWB, une indication des instants de début et de fin de la localisation UWB sur cet axe de temps commun. La deuxième étape S22 peut être une détermination d'un chevauchement entre les projections des au moins deux localisations UWB superposées. La détermination du chevauchement peut être réalisée à partir des instants de début et de fin indiqués sur l'axe pour chaque localisation UWB. Par exemple, la détermination du chevauchement peut comprendre une détermination que l'instant de fin du créneau sur lequel la deuxième localisation UWB impliquant le deuxième identifiant portatif est programmé est situé avant l'instant de début du créneau sur lequel la première localisation UWB impliquant le premier identifiant portatif est programmée.

Après la détection S20, le procédé comprend le décalage S30, dans la programmation respective du boîtier de clé, de la localisation UWB superposée. La localisation superposée qui est décalée est celle impliquant le boîtier de clé. Pour ce boîtier de clé, la programmation reçue comprend, pour chaque période, une localisation respective, et, pour une période donnée, la localisation UWB est superposée avec la localisation UWB d'au moins un autre dispositif portatif. Cette période donnée peut inclure plusieurs créneaux successifs (de durée sensiblement égale), et localisation UWB qui est superposée peut être située à l'intérieur d'un premier de ces créneaux successifs. Le décalage S30 peut comprendre une modification du créneau sur lequel la localisation UWB est programmée. Par exemple, la localisation UWB peut être décalée sur un deuxième créneau (autre que le premier) de la période donnée. Le décalage S30 peut comprendre une détermination d'une nouvelle programmation respective pour le boîtier de clé, la localisation initialement superposée avec une autre étant décalée dans cette nouvelle programmation respective déterminée.

Le décalage S30 de la localisation UWB superposée peut comprendre un envoi, par le système UWB au boîtier de clé, d'un ordre d'exécution de la programmation respective avec la localisation UWB décalée. Par exemple, le décalage S30 peut comprendre un envoi de la nouvelle programmation déterminée au boîtier de clé. Le boîtier de clé peut être configuré pour recevoir et exécuter de tel ordre. Le boîtier de clé télécommande peut être configuré pour exécuter une telle nouvelle programmation envoyée par le système UWB. Lorsque la pluralité d'identifiants portatifs comprend un ou plusieurs dispositifs tiers, ces dispositifs tiers peuvent eux ne pas pouvoir modifier leur programmation respective aussi facilement que le boîtier de clé. Cela rend le procédé particulièrement efficace, puis que celui propose de résoudre le problème de superposition en modifiant la programmation du boîtier de clé (et non des dispositifs tiers).

Le décalage S30 peut être réalisé de n'importe quelle manière. Par exemple, comme illustré sur la figure 2, le décalage S30 peut comprendre les trois étapes S31, S32 et S33. La première étape S31 peut être une projection, sur la programmation respective du boîtier de clé, des localisations UWB de chaque autre dispositif portatif. La projection S31 peut comprendre une indication de tous les instants de début et de fin des localisations UWB de chaque autre dispositif portatif sur l'axe de temps de la programmation respective du boîtier de clé. Pour chaque localisation UWB, les instants de début et de fin qui sont projetés peuvent être les instants de début et de fin du créneau sur lequel la localisation UWB est programmée. En d'autres termes, le procédé peut faire l'hypothèse que chaque localisation UWB dure pendant toute la longueur du créneau sur lequel elle est prévue.

La deuxième étape S32 peut être une détermination d'au moins un créneau libre de la période respective en excluant chaque créneau sur lequel au moins une localisation UWB projetée se superpose. La période respective est la période pendant laquelle la localisation UWB superposée est actuellement programmée. La détermination d'au moins un créneau libre peut comprendre, pour chaque créneau de cette période respective, une vérification que le créneau est libre et, le cas échéant, un enregistrement du créneau comme créneau libre. La vérification qu'un créneau est libre peut comprendre une vérification de l'absence de localisation UWB impliquant un autre dispositif portatif programmé pendant ce créneau (par exemple en vérifiant que l'intersection, sur ledit axe de temps, de ce créneau et de la projection de celui sur lequel la localisation UWB la plus proche pour chaque autre identifiant portatif est nulle.

La troisième étape S33 peut être une reprogrammation de la localisation UWB superposée sur l'au moins un créneau libre déterminé. Par exemple, la troisième étape S33 peut comprendre une sélection d'un créneau parmi les au moins un créneau libre déterminé, puis, une reprogrammation de la localisation UWB superposée sur le créneau sélectionné. La sélection d'un créneau parmi les au moins un créneau libre déterminé peut être réalisée de n'importe quelle manière, comme par exemple aléatoirement ou bien par plus proche distance avec le créneau sur lequel la localisation UWB superposée est initialement programmée. La reprogrammation peut comprendre la détermination d'une nouvelle programmation pour le boîtier de clé dans laquelle la localisation UWB initialement superposée est décalée pour être exécutée sur le créneau sélectionné, et un envoi de cette nouvelle programmation au boîtier de clé (accompagné par exemple d'un ordre d'exécution des localisations UWB selon cette nouvelle programmation).

Dans des exemples, le procédé peut détecter plusieurs superpositions de localisations UWB dans les programmations respectives des identifiants portatifs. Dans ce cas, le procédé peut répéter l'étape de décalage S30 pour chacune des superpositions détectées afin de résoudre le problème de chevauchement à chaque superposition détectée. Chaque décalage S30 peut, dans ce cas, être exécuté comme précédemment discuté en considérant à chaque fois une nouvelle superposition de localisations UWB (et potentiellement de nouveaux identifiants impliqués, ceux-ci incluant au moins un boîtier de clé).

Dans des exemples, la pluralité d'identifiants portatifs comprenant au moins deux dispositifs tiers. Les au moins deux localisations UWB superposées incluant au moins une localisation UWB avec chacun des au moins deux dispositifs tiers. Dans ce cas, le procédé peut comprendre en outre une détermination d'un dispositif prioritaire parmi les au moins deux dispositifs tiers. La détermination du dispositif prioritaire peut être déduite d'un ordre prédéterminé pour tous les dispositifs tiers appliqué par le système UWB. Par exemple, les dispositifs tiers peuvent comprendre un dispositif prioritaire, c'est-à-dire prédéterminé ou désigné comme tel dans le système UWB. Par exemple, les dispositifs tiers peuvent comprendre un dispositif prioritaire et un ou plusieurs dispositifs secondaires. Le dispositif prioritaire peut avoir un fonctionnement prioritaire dans les localisations, par rapport aux un ou plusieurs dispositifs secondaires. Par exemple, les programmations des localisations impliquant le dispositif prioritaire peuvent prévaloir aux programmations des localisations impliquant les un ou plusieurs dispositifs secondaires. Le procédé peut ensuite comprendre une déprogrammation, pour chaque dispositif tier autre que le dispositif prioritaire, de la localisation UWB incluse dans les au moins deux localisations UWB superposées. Cela permet de ne conserver que la localisation UWB du dispositif prioritaire.

Dans des exemples, les étapes de détection S20 et de décalage S30 peuvent être répétées à chaque réception d'une nouvelle programmation respective pour un nouvel identifiant portatif. Par exemple, ce nouvel identifiant portatif peut initialement être hors de portée du véhicule, et l'utilisateur le portant peut s'approcher du véhicule. Ce nouvel identifiant peut également être enregistré par le système UWB (en plus des autres). Pendant que l'utilisateur approche du véhicule, une fois que le nouvel identifiant entre dans le périmètre BLE autour du véhicule, le nouvel identifiant peut être configuré pour commencer une localisation avec le véhicule. Pour cela, le nouvel identifiant peut être configuré pour envoyer sa programmation respective au système UWB. Le procédé peut alors comprendre une réception de cette programmation respective pour ce nouvel identifiant (comme pour les autres identifiants à l'étape S10). Dans ce cas, le procédé peut comprendre une répétition des étapes S20 et S30 avec la nouvelle programmation respective reçue pour le nouvel identifiant. Par exemple, la détection S20 peut comprendre une détection d'une nouvelle superposition entre au moins deux localisations, dont une impliquant le nouvel identifiant, puis, si celui-ci est un boîtier de clé, un décalage de cette localisation dans programmation du nouvel identifiant. Autrement, le procédé peut comprendre le décalage d'une autre localisation parmi celles superposées qui implique un boîtier de clé.

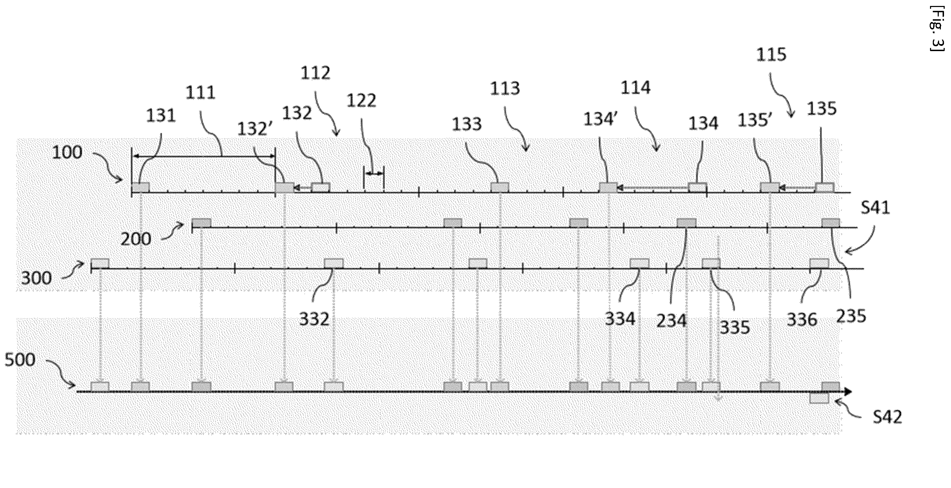

Des exemples vont maintenant être décrits en référence aux figures 3 à 6.

La [Fig. 3] illustre des exemples de décalage de localisations UWB superposées selon le procédé de planification. En particulier, le procédé est appliqué ici à la même situation présentée sur la figure 1. Le procédé comprendre la réception S10, pour chaque identifiant portatif, d'une programmation respective de localisations UWB, ces localisations UWB étant utilisées ensuite pour déterminer la position de chacun des identifiants portatifs. Chaque identifiant portatif peut par exemple être configuré pour envoyer sa programmation respective lorsque celui-ci entre dans un certain périmètre autour du véhicule, par exemple après une étape d'identification préalable. Le système UWB et l'identifiant portatif peuvent ensuite être configurés pour réaliser les localisations UWB selon la programmation respective établie. La figure montre les programmations reçues pour un ensemble de trois identifiants portatifs enregistrés par le système UWB : un boîtier de clé 100 et deux téléphones portables 200, 300. La programmation reçue de chaque identifiant portatif comprend, sur une durée prédéterminée divisée en périodes (les périodes 111, 112, 113 et 114 pour le boîtier de clé 100), une localisation UWB pour chacune des périodes de la durée prédéterminée (la localisation 131 pour le bloc 111, 132 pour le 112, etc.). En particulier, chaque période est divisé en un nombre prédéterminé de créneaux 122 (8 créneaux par période dans cet exemple), et la programmation comprend, pour chaque localisation, le créneau de la période sur lequel la localisation est prévue. Par exemple, pour la première période 111 de la session du premier dispositif portatif 100, la programmation comprend, une donnée numérique indiquant que la localisation UWB est prévue sur le premier créneau 131 de la période 111. Chaque localisation UWB programmée d'un dispositif portatif comprend des échanges UWB entre le dispositif portatif et chacun des capteurs UWB du système UWB, et ces échanges UWB sont réalisés pendant le créneau de la période sur lequel la localisation UWB est prévue.

Le procédé comprend ensuite l'étape de détection S20 de superposition(s). Dans cet exemple, le procédé détecte plusieurs superpositions de localisations UWB dans les programmations respectives des identifiants portatifs. En particulier, le procédé détecte une première superposition entre les localisations 132 et 332, une deuxième superposition entre les localisations 134, 234 et 335 et une troisième superposition entre les localisations 135, 235 et 336. La détection S20 de chaque superposition peut comprendre les deux étapes S21 et S22 précédemment discutées, à savoir une première étape S21 de projection des localisations UWB des dispositifs portatifs 100, 200, 300 sur un axe de temps commun (par exemple l'axe 500), puis, une deuxième étape S22 de détermination, pour chaque superposition, d'un chevauchement entre les projections des localisations UWB.

Une fois les superpositions détectées, le procédé répète l'étape de décalage S30 pour chacune des superpositions détectées afin de résoudre le problème d'interférence à chaque superposition détectée. Chaque résolution de superposition de localisations est maintenant discutée plus en détail.

La première superposition est une superposition de deux localisations : la localisation 132 impliquant le boitier de clé 100 et la localisation 332 impliquant le téléphone portable 300. Le procédé comprend un décalage S30, dans la programmation respective du boîtier de clé 100, de la localisation UWB 132 superposée. La localisation UWB superposée 132 est actuellement programmée à l'intérieur du troisième créneau de la période 112. Le procédé décale la localisation UWB 132 sur le premier créneau 132' de la période 112. Le décalage S30 comprend les trois étapes S31, S32 et S33 précédemment discutées. La première étape S31 est une projection, sur la programmation respective du boîtier de clé 100, des localisations UWB de chaque autre dispositif portatif 200, 300. La deuxième étape S32 est une détermination d'au moins un créneau libre de la période respective en excluant chaque créneau sur lequel au moins une localisation UWB projetée se superpose. Dans cet exemple, le procédé peut déterminer que les premier, deuxième, cinquième, sixième, septième et huitième créneaux de la période 112 sont libres. La troisième étape S33 est une reprogrammation de la localisation UWB superposée 132 sur l'au moins un créneau libre déterminé (la localisation UWB décalée 132' étant maintenant prévue sur le premier créneau).

La deuxième superposition est une superposition de trois localisations : la localisation 134 impliquant le boitier de clé 100, la localisation 234 impliquant le téléphone portable 200 et la localisation 335 impliquant le téléphone portable 300. Le procédé comprend un décalage S30, dans la programmation respective du boîtier de clé 100, de la localisation UWB 134 superposée. La localisation UWB superposée 134 est actuellement programmée à l'intérieur du huitième créneau de la période 114. Pour cette superposition, le procédé décale la localisation UWB 134 sur le troisième créneau 134' de la période 114 (les troisième et sixième créneaux de la période 114 étant libres). Dans cette deuxième superposition, les localisations impliquées incluent la localisation 234 impliquant le téléphone portable 200 et la localisation 335 impliquant le téléphone portable 300. Comme ces deux localisations ne sont pas superposées entre elles (elles sont seulement superposées avec la localisation 134 impliquant le boitier de clé 100), le procédé conserve la programmation de ces localisations (et ne modifie pas la programmation des téléphones portables 200 et 300).

La troisième superposition est une superposition de trois localisations : la localisation 135 impliquant le boitier de clé 100, la localisation 235 impliquant le téléphone portable 200 et la localisation 336 impliquant le téléphone portable 300. La localisation UWB superposée 135 est actuellement programmée à l'intérieur du septième créneau de la période 115. Pour cette superposition, le procédé décale la localisation UWB 135 sur le quatrième créneau 135' de la période 115 (les deuxième, troisième, quatrième et cinquième créneaux de la période 115 étant libres). Dans cette troisième superposition, les localisations impliquées incluent la localisation 235 impliquant le téléphone portable 200 et la localisation 336 impliquant le téléphone portable 300. Ces deux localisations sont superposées entre elles. Le procédé comprend une détermination de la superposition des au moins une localisation UWB avec chacun des au moins deux dispositifs tiers (200 et 300 dans cet exemple). Le procédé comprend une détermination S40 d'un dispositif prioritaire parmi les au moins deux dispositifs tiers 200, 300. Dans cet exemple, le téléphone portable 200 est prioritaire par rapport au téléphone portable 300 (il est par exemple enregistré comme tel par le système UWB). Le procédé comprend ensuite une déprogrammation S42, pour le dispositif tier 200, de la localisation UWB 336.

Après chaque décalage S30, le procédé comprend une détermination d'une nouvelle programmation respective pour le boîtier de clé 100. Cette nouvelle programmation comprend les localisations décalées 132', 134' et 135'. Le procédé comprend un envoi, par le système UWB au boîtier de clé 100, d'un ordre d'exécution de la nouvelle programmation avec les localisations décalées 132', 134' et 135'. Le boîtier de clé 100 est configuré pour recevoir et exécuter un tel ordre. Le procédé comprend également un envoi, par le par le système UWB au téléphone portable 300, d'un ordre de déprogrammation (ou d'annulation) de la localisation 336. Le téléphone portable 300 est configuré pour ne pas exécuter la localisation 336 dans ce cas. Le procédé permet ainsi d'éviter l'annulation de quatre localisations (une pour la première superposition, deux pour la deuxième et une pour la troisième). Cela améliore la précision de la localisation des trois identifiants portatifs.

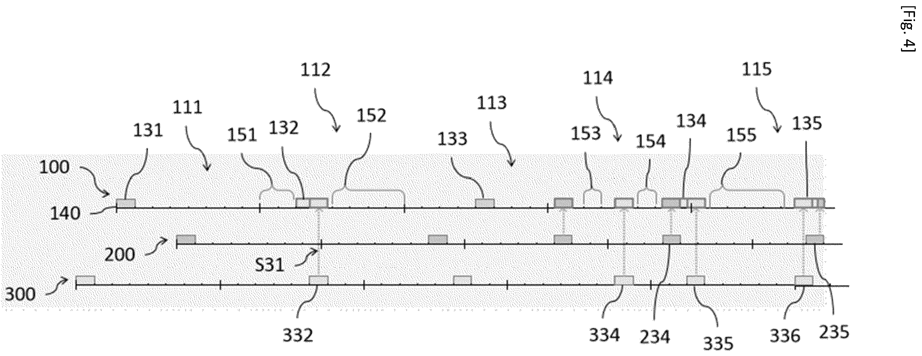

La [Fig. 4] illustre des exemples de détermination de créneaux libres. La figure reprend l'exemple de la figure 3 avec des programmations reçues par le système UWB de trois dispositifs portatifs 100, 200 et 300. Pour chaque superposition, le décalage S30 comprend les trois étapes S31, S32 et S33 précédemment discutées. La première étape S31 est une projection, sur la programmation respective du boîtier de clé 100, des localisations UWB de chaque autre dispositif portatif 200, 300. La deuxième étape S32 est une détermination d'au moins un créneau libre de la période respective en excluant chaque créneau sur lequel au moins une localisation UWB projetée se superpose. Pour la première superposition, le procédé détermine que les premier et deuxième créneaux 151 et les cinquième, sixième, septième et huitième créneaux de la période 112 sont libres. La localisation UWB superposée 132 est donc reprogrammée sur l'un de ces créneaux libres (le premier créneau dans cet exemple). Pour la deuxième superposition, le procédé détermine que les troisième 153 et sixième 154 créneaux de la période 114 sont libres. Le procédé décale donc la localisation UWB 134 sur le troisième créneau de la période 114. Pour la troisième superposition, le procédé détermine que les deuxième, troisième, quatrième et cinquième créneaux 155 de la période 115 sont libres. Le procédé décale donc la localisation UWB 135 sur le quatrième créneau de la période 115.Le créneau libre est un créneau situé dans la période où la superposition a lieu et en amont de cette superposition. Ainsi la localisation de l'identifiant n'est pas retardée.

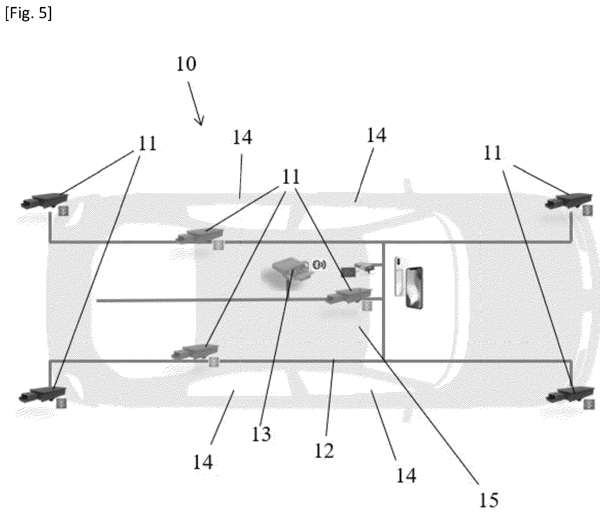

La [Fig. 5] illustre un exemple de système de véhicule 10. Le système 10 est configuré pour mettre en œuvre le procédé de déverrouillage. Le système comprend plusieurs capteurs (ou ancres) UWB secondaires 11 reliés sur un réseau privé CAN (acronyme de l'anglais « Controller Area Network », qui signifie réseau de contrôleurs) 12. Les capteurs UWB secondaires 11 sont des capteurs intérieures au véhicule. Le système comprend également un capteur (ou ancre) principal 13, qui est un boîtier maître pour le système. Chaque capteur UWB comprend des moyens pour émettre et recevoir des échanges UWB (tels qu'une ou des antennes émettrice et/ou réceptrice de tels échanges UWB), avec des dispositifs portables, par exemple pour exécuter des localisations UWB de ces dispositifs portables. Le système comprend également un lecteur NFC 14. Le système supporte la technologie Bluetooth. L'ancre principale 13 et le lecteur NFC 14 sont également reliés au réseau 12 du système.

Un boîtier de clé 110 télécommande de véhicule, ou « identifiant », peut comprendre un boîtier protecteur englobant les composants du boîtier de clé. Le boîtier protecteur peut comprendre de la matière plastique, de la matière métallique et/ou de la matière plastique caoutchouc. Le boîtier de clé 110 peut comprendre un logo, par exemple en métal. Le logo peut être arrangé sur l'enveloppe externe du boîtier protecteur, et/ou le logo peut représenter une marque constructeur. Le boîtier de clé 110 peut comprendre à l'intérieur du boîtier protecteur un insert métallique, qui permet d'ouvrir et/ou de démarrer un véhicule 120 manuellement, par introduction et manipulation de l'insert dans une serrure respective du véhicule 120.

Le boîtier de clé 110 comprend un composant BLE 112, configuré pour réaliser des échanges BLE avec un véhicule, et comprenant par exemple un microprocesseur. Le boîtier de clé 110 comprend également une antenne 116 reliée au composant BLE 112. L'antenne 116 est configurée pour émettre ou recevoir des signaux BLE. Le microprocesseur du composant BLE 112 peut avoir en mémoire un programme d'ordinateur permettant les communications BLE, et de réaliser différents fonctionnalités spécifiques. Le composant BLE 112 peut avoir en mémoire la clé BLE 132 échangée avec le véhicule 120. Le boîtier de clé 110 comprend également un composant UWB 111 pour réaliser une communication UWB avec un véhicule.

## Revendications

1. Procédé de planification implémenté par un système UWB de véhicule comprenant un ou plusieurs capteurs UWB, le système UWB ayant enregistré une pluralité d'identifiants portatifs, la pluralité d'identifiants portatifs comprenant un boîtier de clé télécommande, le procédé comprenant :
• une réception, pour chaque identifiant portatif, d'une programmation respective de localisations UWB avec le système UWB de véhicule ;
• un détection d'une superposition entre au moins deux localisations UWB programmées, les au moins deux localisations UWB superposées incluant une localisation UWB avec le boîtier de clé ; et
• un décalage, dans la programmation respective du boîtier de clé, de la localisation UWB superposée.

2. Procédé selon la revendication 1, dans lequel la localisation UWB superposée est programmée à l'intérieur d'un premier créneau d'une période respective incluant plusieurs créneaux, la localisation UWB étant décalée sur un deuxième créneau de la période respective.

3. Procédé selon la revendication 2, dans lequel le décalage de la localisation UWB superposée comprend :
• une projection, sur la programmation respective du boîtier de clé, des localisations UWB de chaque autre dispositif portatif ;
• une détermination d'au moins un créneau libre de la période respective en excluant chaque créneau sur lequel au moins une localisation UWB projetée se superpose ; et
• une reprogrammation de la localisation UWB superposée sur l'au moins un créneau libre déterminé.

4. Procédé selon l'une quelconque des revendications 1 à 3, dans lequel la détection de la superposition comprend :
• une projection des localisations UWB de chacun des dispositifs portatifs sur un axe de temps commun ; et
• une détermination d'un chevauchement entre les projections des au moins deux localisations UWB superposées.

5. Procédé selon l'une quelconque des revendications 1 à 4, dans lequel le décalage de la localisation UWB superposée comprend un envoi, par le système UWB au boîtier de clé, d'un ordre d'exécution de la programmation respective avec la localisation UWB décalée.

6. Procédé selon l'une quelconque des revendications 1 à 5, dans lequel la pluralité d'identifiants portatifs comprenant au moins deux dispositifs tiers, les au moins deux localisations UWB superposées incluant au moins une localisation UWB avec chacun des au moins deux dispositifs tiers, le procédé comprenant en outre :
• une détermination d'un dispositif prioritaire parmi les au moins deux dispositifs tiers ; et
• une déprogrammation, pour chaque dispositif tier autre que le dispositif prioritaire, de la localisation UWB incluse dans les au moins deux localisations UWB superposées.

7. Procédé selon l'une quelconque des revendications 1 à 5, dans lequel les étapes de détection et de décalage sont répétées à chaque réception d'une nouvelle programmation respective pour un nouvel identifiant portatif.

8. Procédé d'utilisation d'un système UWB de véhicule comprenant un ou plusieurs capteurs UWB, le système UWB ayant enregistré une pluralité d'identifiants portatifs, la pluralité d'identifiants portatifs comprenant le boîtier de clé, le procédé comprenant une exécution des localisations UWB planifiées selon le procédé de l'une quelconque des revendications 1 à 7.

9. Système UWB de véhicule comprenant un ou plusieurs capteurs UWB et configuré pour exécuter le procédé de l'une quelconque des revendications 1 à 7 et/ou pour être utilisé selon le procédé de la revendication 8.

10. Capteur UWB pour système UWB de véhicule configuré pour une exécution par le système du procédé de l'une quelconque des revendications 1 à 7 et/ou pour une utilisation du système selon le procédé de la revendication 8.

11. Programme informatique comprenant des instructions de code de programme pour l'exécution du procédé selon l'une quelconque des revendications 1 à 7 et/ou selon la revendication 8, lorsque ledit programme est exécuté par un processeur.
